# EUROPEAN PATENT APPLICATION

(11) **EP 3 200 003 A1**
(43) Date of publication of application: **02.08.2017**
(21) Application number: 17151320.3
(22) Date of filing: 13.01.2017
(51) Int. Cl.: G02B 21/00, G02B 21/22, G02B 25/00, G02B 27/01

(54) **GLASSES-FREE 3D DISPLAY DEVICE**

(30) Priority: 27.01.2016 KR 20160009873
(71) Applicant: SOMETECH Co., Ltd., Seoul 08389 (KR)
(72) Inventor: YANG, Hee bong, 472-842 Namyangju-si (KR); LEE, Jong Ik, 03612 Seoul (KR)
(74) Representative: Noréns Patentbyrå AB

(57) **Abstract**

Disclosed is a glasses-free 3D display device capable of implementing a 3D image by directly forming a left image and a right image of an object on a left eye and a right eye, and including: an ocular lens having a curved structure in which a convex portion bulges outwards from a center of the ocular lens, and of which a horizontal length is longer than an interpupillary distance of a user; and a pair of achromatic prisms placed at front sides of a left curved surface and a right curved surface of the convex portion, wherein the achromatic prisms enable optical paths to be corrected so that chromatic aberration, a change in optical axis, and nonlinear distortion are corrected, and the corrected images are magnified and formed on the retina of the eyes while passing through the ocular lens, and thus adjustment of the interpupillary distance is unnecessary.

## Description

### BACKGROUND OF THE INVENTION

### Field of the Invention

The present invention generally relates to a glasses-free 3D display device capable of implementing a 3D image by directly forming a left image and a right image of an object on the retina of a left eye and a right eye. More particularly, the present invention relates to a glasses-free 3D display device including an ocular lens having a curved structure in which a convex portion bulges outwards from a center of the ocular lens, and of which a horizontal length is formed to be longer than an interpupillary distance of a user, and a pair of achromatic prisms respectively placed at front sides of a left curved surface and a right curved surface of the convex portion, wherein the achromatic prisms enable optical paths to be corrected while left and right images of the object that are individually captured and displayed pass through the achromatic prisms, so that chromatic aberration, a change in optical axis, and nonlinear distortion are corrected, and the left and right images corrected by the achromatic prisms are magnified and formed on the retina of the left eye and the right eye of the user respectively while passing through the ocular lens, and thus there is no need for adjustment of a distance between both lenses as in a glasses type. Namely, adjustment of the interpupillary distance is unnecessary.

In particular, the present invention is advantageous in that an area, which is not easily observed or is not allowed to reach a field of view of the user, is magnified and is shown in three dimensions, and thus it is possible to be employed for extensive use in the medical field or other industrial fields.

### Description of the Related Art

A microscope is an instrument used to see an object with magnification. In the past, an observer saw the object by bringing his or her eyes to an eyepiece. However, in recent years, as technologies have been developed, a display device that enables the observer to see the object under magnification without constraint of behavior (for example, the observer should bring his or her eyes to the eyepiece) by displaying the object on a monitor has been released.

In general, a video microscope device denotes a display device that enables the observer to see the object that is not visible to the naked eye or an area that is not easily identified under magnification.

The video microscope device has been employed for use in the medical field as well as various industrial fields.

A typical video microscope device functions by displaying an image of the object being captured through a microscope, and then a user observes the object through an ocular lens and perceives an image

In this case, the image that is output and observed through the ocular lens is allowed to be displayed simply as a two-dimensional image. Thus, the object cannot be implemented in three-dimensions, so there is a problem of observing and identifying the object with accuracy.

Accordingly, in recent years, a 3D display device that enables the user to feel a sense of three-dimensions with respect to the image of the object has been developed in a variety of forms.

Here, examples of a method of displaying the image in three-dimensions include a glasses type and a glasses-free type.

The glasses type denotes a method that allows the user to feel a stereoscopic effect in a state that a three-dimensional image is divided into various parts that overlap each other and the images are displayed on an additional monitor, etc. whereby the user uses 3D glasses to correct the three-dimensional image.

The glasses-free type denotes that a method that allows the user to directly watch a 3D monitor through the ocular lens without a need to wear the 3D glasses.

As shown in Korean Patent Application No. 10-2004-0070053 entitled "Operation microscope apparatus", Korean Patent No. 10-1481905 entitled "Integrated stereoscopic imaging system for surgical microscope", and Korean Patent Application No. 10-2011-0001952 entitled "Head mounted operating magnifying apparatus", all of which disclose a surgical microscope device employing a 3D display device as in the related art, whereby the surgical microscope device enables the user to watch the two-dimensional image or the three-dimensional image of an object by looking into two lenses.

In addition, as a 3D display device capable of being employed in other industrial fields as well as the medical field, Korean Patent No. 10-0733047 disclosed "Digital stereo camera, 3-dimensional display, 3-dimensional projector, and printer and stereo viewer". Here, the left and right images captured by a pair of photographing optical systems is individually projected by a pair of electronic displays, so that each image is viewed in the form of a three-dimensional image through a stereo viewfinder having a pair of the ocular lenses.

As such, in the case of using two lenses, each image is directly formed on the retina of the left eye and the right eye such that the 3D image is viewed more accurately.

However, when using two lenses (glasses type) as in the related art, since each user has their own interpupillary distance (distance from the center of the pupil of one eye to the other eye, average 6.5 cm), there remains a problem in that the user should adjust (similar to distance adjustment of binoculars) a width of an eyepiece having two lenses.

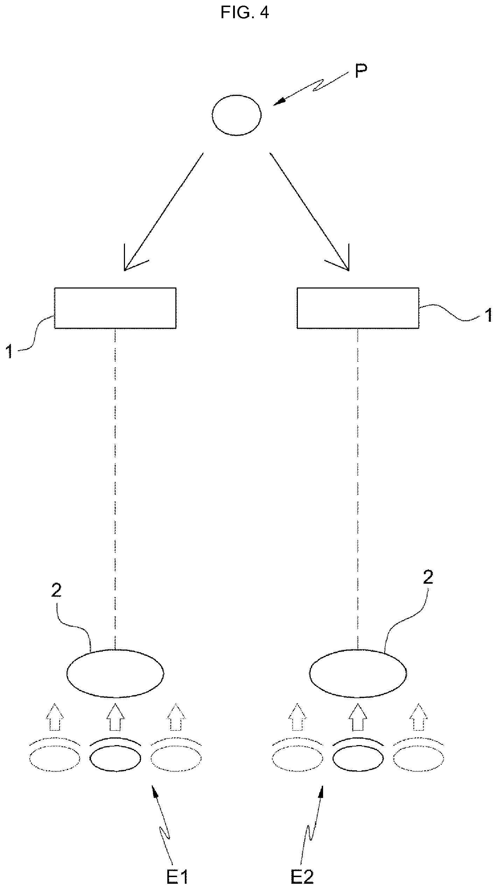

In other words, as shown in FIG. 4, in the case that a pair of lenses 2 are provided correspondingly to a pair of displays 1 on which individually captured left and right images of an object P that are respectively displayed, since each user has their own interpupillary distance (distance between a left eye E1 and a right eye E2), if a distance between lenses 2 is not adjusted in response to the interpupillary distance, parallax value between the left and right images due to distance difference between a focal point (visual point) of eyes E1 and E2 and the lenses 2. Thus, there occurs a problem in that an observer artificially adjusts parallax value in accordance with unconscious command of the brain, thereby causing dizziness and fatigue of the eyes.

Moreover, since the observer feels minimal dizziness and fatigue of the eyes at the beginning of observing the images, the observer realizes that the interpupillary distance and the distance between the lenses are incorrect only when feeling dizziness after twenty to thirty minutes have elapsed. Thus, it is useless to belatedly adjust the distance between the lenses in response to the interpupillary distance. In addition, even though it is possible to adjust the distance between the lenses, it is difficult to accurately adjust the distance between the lenses in response to the interpupillary distance. Thus, there is a further problem in that it is difficult to obtain a three-dimensional image with an enhanced sense of reality.

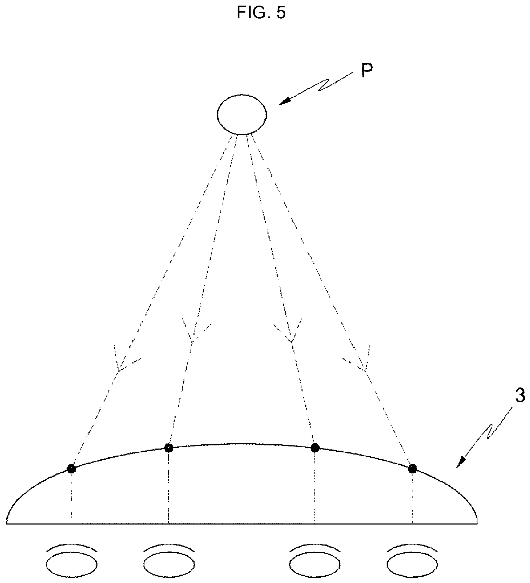

On the other hand, without using a pair of lenses shown in FIG. 4, by utilizing the fact that when inclining a convex lens based on nodal point, an image does not change its state while light is refracted, as shown in FIG. 5, when using a convex lens 3 (or prism) of which a front surface bulges outwards as a single lens (glasses-free type), and each image incident on the single lens is refracted in the same direction regardless of incidence directions thereof while passing through a convex portion of the lens. Thus, even though the interpupillary distance of the user observing a rear surface of the convex lens 3 is changed, an image is formed on the back of the eyeball in the same direction as a focal point direction of the eye. Thus, it is possible to achieve correction of parallax value between left and right images.

However, when using one convex lens 3, refractive index differs in accordance with wavelength of light. Thus, there occurs a problem in that the image is blurred due to failure of focusing at one point, thereby causing a change in optical axis, nonlinear distortion, and chromatic aberration caused by the change in optical axis.

Thus, a new type of glasses-free 3D display device without the need to adjust the interpupillary distance by using one convex lens 3, and which capable of correcting the change in optical axis, nonlinear distortion, and chromatic aberration, is required.

### SUMMARY OF THE INVENTION

Accordingly, the present invention has been made keeping in mind the above problems occurring in the related art, and the present invention is intended to propose a glasses-free 3D display device including: an ocular lens having a curved structure in which a convex portion bulges outwards from a center of the ocular lens, and of which a horizontal length is formed to be longer than an interpupillary distance of a user; and a pair of achromatic prisms respectively placed at front sides of a left curved surface and a right curved surface of the convex portion, so that it is possible to achieve convenience of usage by introduction of a glasses-free type out of methods of displaying and perceiving a 3D image, watch and obtain the 3D image without a need to additionally perform an adjustment of an eyepiece for adjusting the interpupillary distance although users have different interpupillary distances, and correct a change in optical axis, nonlinear distortion, and chromatic aberration caused by the change in optical axis.

Further, in order to realize accurate correction of images passing through the achromatic prisms, the present invention is intended to propose a glasses-free 3D display device employing the achromatic prisms configured with a first prism having a first protruding angular portion at a first side of a front surface thereof, and a second prism of which a front surface is tightly coupled with a rear surface of the first prism by being close contact therewith, and having a second protruding angular portion at a second side of a rear surface thereof.

Further, in order that a corrected image while passing through the achromatic prisms is accurately incident on the curved surfaces of the ocular lens so as to accurately form the image without being blurred, the present invention is intended to propose a glasses-free 3D display device including the achromatic prisms configured in which the first protruding angular portion of the first prism is placed in a direction of the glabella of the user, a long side portion of the first prism is placed in a direction of the front surface the first prism, the second protruding angular portion of the second prism is placed in a direction of associated one of temples of the user, a long side portion of the second prism is placed in a direction of the rear surface the second prism, and the long side portion having a longer length based on the second protruding angular portion of the second prism is placed in parallel to a center tangent line of each of the curved surfaces.

In order to achieve the above object, according to one aspect of the present invention, there is provided a glasses-free 3D display device, including: an ocular lens having a curved structure in which a convex portion bulges outwards from a center of the ocular lens, and of which a horizontal length is formed to be longer than an interpupillary distance of a user; and a pair of achromatic prisms respectively placed at front sides of a left curved surface and a right curved surface of the convex portion, wherein the achromatic prisms enable optical paths to be corrected while left and right images of an object that are individually captured and displayed pass through the achromatic prisms, so that chromatic aberration, a change in optical axis, and nonlinear distortion are corrected, and the left and right images corrected by the achromatic prisms are magnified and formed on the retina of the left eye and the right eye of the user respectively while passing through the ocular lens.

In the glasses-free 3D display device according to the present invention, each of the achromatic prisms may be configured with: a first prism having a first protruding angular portion at a first side of a front surface thereof; and a second prism of which a front surface is tightly coupled with a rear surface of the first prism by being close contact therewith, and having a second protruding angular portion at a second side of a rear surface thereof.

Further, in the glasses-free 3D display device according to the present invention, each of the achromatic prisms may be configured in which the first protruding angular portion of the first prism is placed in a direction of the glabella of the user, and a long side portion of the first prism is placed in a direction of the front surface the first prism, and the second protruding angular portion of the second prism is placed in a direction of associated one of temples of the user, and a long side portion of the second prism is placed in a direction of the rear surface the second prism.

Moreover, in the glasses-free 3D display device according to the present invention, each of the achromatic prisms may be configured in which the long side portion having a longer length based on the second protruding angular portion of the second prism is placed in parallel to a center tangent line of each of the curved surfaces.

The present invention can achieve convenience of usage without a need to wear additional 3D glasses, and can simultaneously achieve correction of the change in optical axis, nonlinear distortion, and chromatic aberration by employing the achromatic prisms that compensate for chromatic aberration by using the first and second prisms having different refractive indices. Further, the image of the object that passes through the ocular lens through the achromatic prisms is planarly displayed without distortion, so the present invention can reduce dizziness even after observing the ocular lens for a long time. Moreover, by using a single ocular lens including a convex portion in the form of a convex lens, the present invention can be immediately used without additional operation of interpupillary distance adjustment, such as eyepiece adjustment.

In particular, the present invention can be utilized as an individual monitor of a surgical microscope device employed in the medical field. Further, the present invention can enable the 3D display device to freely move and improves space efficiency by achieving weight reduction and miniaturization. Thus, the present invention can be widely used in various industrial fields with variety of additional equipment, as well as the surgical video microscope device.

### BRIEF DESCRIPTION OF THE DRAWINGS

The above and other objects, features and other advantages of the present invention will be more clearly understood from the following detailed description when taken in conjunction with the accompanying drawings, in which:

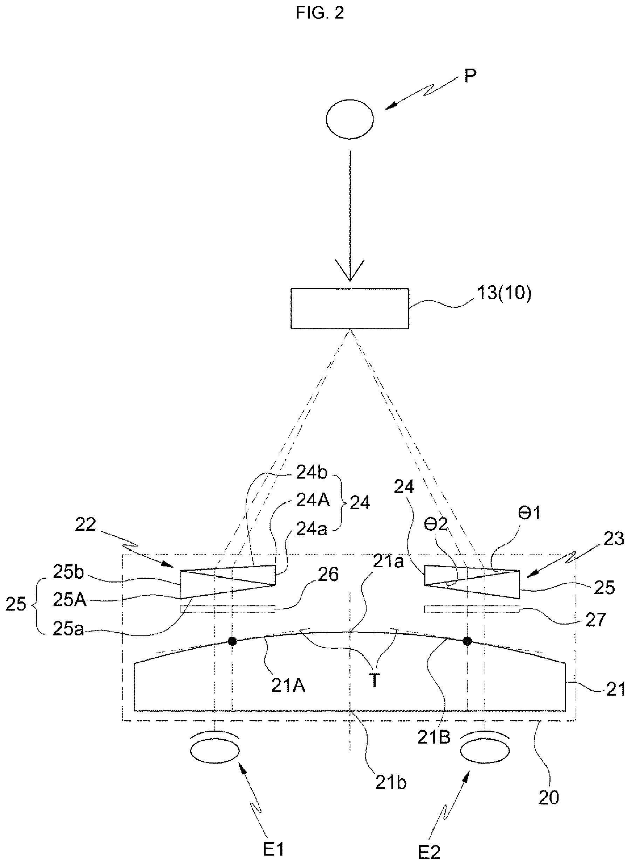

FIGS. 1 and 2 are conceptual diagrams illustrating a glasses-free 3D display device according to the present invention;
FIGS. 3A, 3B, and 3C are plan views illustrating an ocular lens according to embodiments of the present invention; and
FIGS. 4 and 5 are conceptual diagrams illustrating a glasses type display device and glasses-free type display device in the related art.

### DETAILED DESCRIPTION OF THE INVENTION

The present invention will now be described in detail based on aspects (or embodiments). The present invention may, however, be embodied in many different forms and should not be construed as being limited to only the embodiments set forth herein, but should be construed as covering modifications, equivalents or alternatives falling within ideas and technical scopes of the present invention.

In the figures, like reference numerals, particularly, reference numerals having the same last two digits or the same last two digits and letters refer to like elements having like functions throughout, and unless the context clearly indicates otherwise, elements referred to by reference numerals of the drawings should be understood based on this standard.

Also, for convenience of understanding of the elements, in the figures, sizes or thicknesses may be exaggerated to be large (or thick), may be expressed to be small (or thin) or may be simplified for clarity of illustration, but due to this, the protective scope of the present invention should not be interpreted narrowly.

The terminology used herein is for the purpose of describing particular aspects (or embodiments) only and is not intended to be limiting of the present invention. As used herein, the singular forms are intended to include the plural forms as well, unless the context clearly indicates otherwise.

It will be further understood that the terms "comprises", "comprising", "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which the present invention belongs. It will be further understood that terms used herein should be interpreted as having a meaning that is consistent with their meaning in the context of this specification and the relevant art and will not be interpreted in an idealized or overly formal sense unless expressly so defined herein.

Terms such as 'a fist ∼ ' and 'a second ∼ ' are used only for the purpose for distinguishing a constitutive element from other constitutive elements, but constitutive elements should not be limited to a manufacturing order, and the terms described in the detailed description of the invention may not be consistent with those described in the claims.

Hereinafter, a glass-free 3D display device according to the present invention will be described with reference to the accompanying drawings.

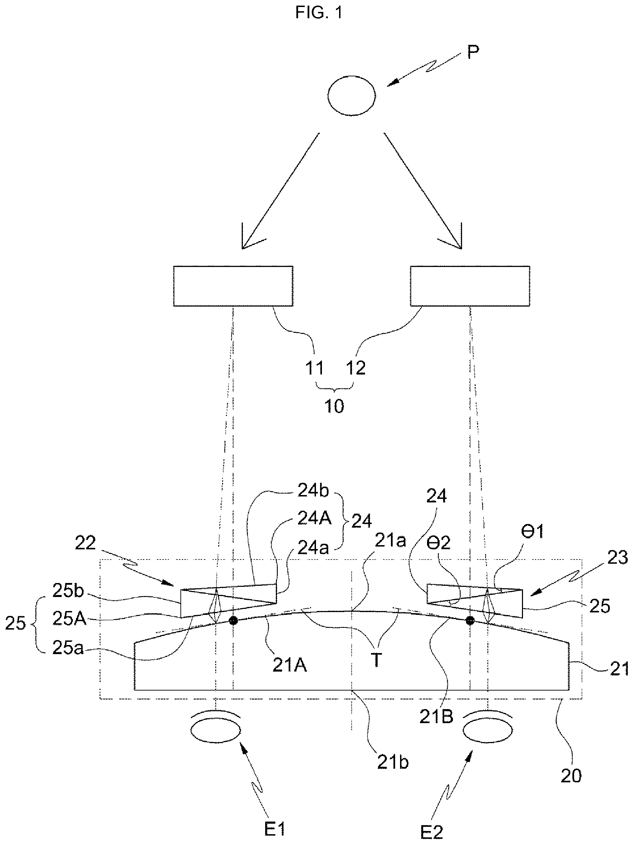

As shown in FIG. 1, which is a conceptual diagram schematically showing a configuration and a structure of the present invention, the glasses-free 3D display device according to the present invention includes a image-capturing part (not shown), a display part 10, and an ocular part 20.

The image-capturing part, the display part 10, and the ocular part 20 are configured to be provided inside one housing (not shown) to form one device (a camera, which will be described later, can be modified to an additional configuration in some cases). Here, the housing is configured to substantially have a triangular shape having a pointed front, and is provided at opposite sides of the front with the image-capturing part and/or first and second image display parts 11 and 12. Further, an image transmission means (not shown) using a reflector is provided between the first and second image display parts 11 and 12 and the ocular part 20, to agree with the shape of the housing.

As such, the reason why the image transmission means by which image are transmitted is adopted so that the housing has the triangular shape, is to improve space efficiency, thereby enabling usage or installation of a variety of other additional equipment at the front of the housing during surgery or various operations, etc. employing the present invention.

Moreover, if the housing having a shape similar to the triangle is adopted, it is possible to increase concentration of a user during surgery or various operations by blocking an obstructive factor that obstructs forward and left and right field of view when the user observes the ocular part 20.

The housing may be configured in a variety of forms such as a holder type that is coupled with an additional stand, a helmet, a head mount type, etc.

First, the image-capturing part includes first and second cameras (not shown) that respectively capture a left image and a right image of an object P, the display part 10 includes image display parts 11, 12, and 13 that are respectively connected to the first and second cameras and output captured images, and the image transmission means that allows the images to be reflected and transferred through the reflector is disposed between the display part 10 and the ocular part 20, thereby enabling the user to observe and watch the images that are output by the image display parts 11, 12, and 13 through the ocular part 20.

The first and second cameras may be advantageous in miniaturization and weight reduction of the device by employing a small camera used in a smart phone, a high-end digital camera, etc. rather than employing a conventional camera used in video recording. Such cameras are mounted on lower surfaces of opposite sides of the housing, and respectively capture a left side and a right side of the object P, thereby enabling provision of a 3D image.

In some cases, the first and second cameras may be configured as an additional device rather than the housing, and may transfer images captured by each of the cameras to the image display parts 11, 12, and 13 mounted on the housing to be output in a wired or wireless manner.

Further, the image display parts 11, 12, and 13 may employ a known display device capable of outputting a high-resolution image, such as an LCD, LED, etc.

In this case, if the display part 10 is configured with two of the first and second image display parts 11 and 12 as shown in FIG. 1, the captured left image and right image of the object P are respectively output on the image display parts 11 and 12. After that, the captured left image and right image of the object P respectively pass through the achromatic prisms 22 and 23, and are respectively transferred to left and right curved surfaces 21A and 21B of the ocular lens 21.

Further, if the display part 10 is configured with one third image display part 13, the captured left image and right image of the object P are output together on the third image display part 13 (3D image output in the form of overlapped two images), and the captured left image and right image of the object P simultaneously and respectively pass through the achromatic prisms 22 and 23. Here, polarizing filters 26 and 27 are respectively provided between each of the achromatic prisms 22 and 23 and the ocular lens 21, such that, after filtering one of the captured left image and right image of the object P that are to be transferred to the left and right curved surfaces 21A and 21B of the ocular lens 21, the captured left image and right image of the object P are respectively transferred to the left and right curved surfaces 21A and 21B of the ocular lens 21.

Next, the ocular part 20 is configured with one ocular lens 21 placed at a front side of a rear side and a pair of achromatic prisms 22 and 23 placed on a front side of the ocular lens 21.

The ocular lens 21 magnifies and forms corrected images that are corrected while passing through the achromatic prisms 22 and 23 on the retina of a left eye E1 and a right eye E2 of the user.

The one ocular lens 21 enables the left image and the right image of the object P to be displayed always in the same directions by using refraction of light although gaze directions of the users, namely interpupillary distances, remain different from each other. Thus, the left image and the right image of the object P are correctly formed with a predetermined magnification while going from crystalline lens to the user's retina, thereby enabling provision of 3D images that make the user feel a three-dimensional effect and a sense of distance with respect to images recognized by the user.

In order to respectively receive the left image and the right image that are respectively passed through the achromatic prisms 22 and 23 into a left side and a right side of a front surface of the ocular lens 21, the ocular lens 21 is provided with a convex portion 21a bulging outwards from a center of the front surface in the form of a circular-arc shape, thereby having a curved structure in which the convex portion 21a bulges outwards from the center of the front surface, and a horizontal length is formed to be longer than the interpupillary distance of the user.

In other words, the ocular lens 21 is configured as one convex single lens (or prism) rather than two lenses corresponding to the achromatic prisms 22 and 23.

Accordingly, based on the front convex portion 21a of the ocular lens 21, the left image received into the left curved surface 21A and the right image received into the right curved surface 21B are refracted while passing through the ocular lens 21, thereby passing through the ocular lens 21 in the same directions regardless of a direction of incident light.

In this case, a rear surface of the ocular lens 21 may be in any shape as long as the ocular lens 21 has the convex portion 21a on the center of the front surface.

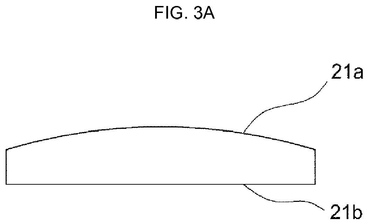

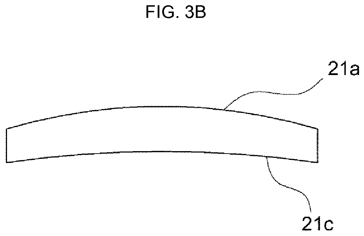

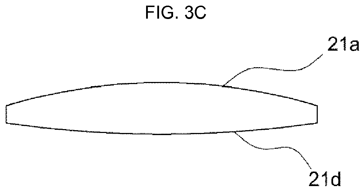

In other words, as shown in FIG. 3A, the ocular lens 21 may be configured with a plano-convex lens having the front convex portion 21a, and a rear plane surface 21b formed by making a rear surface planar. On the other hand, as shown in FIG. 3B, the ocular lens 21 may be configured with a concavo-convex lens having the front convex portion 21a, and a rear concave portion 21c concavely formed on a center of a rear surface in a forward direction. On the other hand, as shown in FIG. 3C, the ocular lens 21 may be configured with a double convex lens having the front convex portion 21a, and a rear convex portion 21d convexly formed on a center of a rear surface in a rear direction.

However, in the case of the concavo-convex lens and the double convex lens, it is preferable that curvatures of the rear concave portion 21c and the rear convex portion 21d remain smaller than a curvature of the front convex portion 21a.

Moreover, although it is not shown in the drawing, the ocular lens 21 may be configured with two different kinds of lenses out of the plano-convex lens, the concavo-convex lens, and double convex lens that are shown in FIG. 3A, 3B, and 3C placed so as to overlap in forward and rear directions (for example, the double convex lens and the plano-convex lens sequentially overlap each other). Thus, small-sized images being displayed on the display part 10 can be magnified while passing through the lenses.

Hereinafter, for convenience of understanding, the plano-convex lens having the front convex portion 21a and the rear plane surface 21b shown in FIG. 1 will be representatively described.

By the present invention, since the left image and the right image are respectively formed on the retina of the left eye E1 and the right eye E2 regardless of the interpupillary distance, without changing the gaze direction, the user who observes the rear plane surface 21b of the ocular lens 21 can perceive 3D images without additionally adjusting the interpupillary distance.

In other words, in the case of two convex ocular lenses through which the left eye E1 and the right eye E2 gaze by being close contact to the lenses as in the related art, rather than one ocular lens 21 composed of a single convex lens, if a horizontal length between the lenses and a distance between the left eye E1 and the right eye E2 are different from each other, gaze directions of the eyes are deflected with respect to the lenses, thereby resulting in defocus aberration or disrupting correct image formation on the eyes. Thus, it requires adjustment of the interpupillary distance by precisely adjusting the horizontal length between the lenses.

On the other hand, in the present invention, as refraction of light occurs due to the ocular lens 21 having the front convex portion 21a, although a user having a different interpupillary distance gazes at the ocular lens 21, the gaze directions of the eyes remain the same as focal point directions the images regardless of the interpupillary distance. Accordingly, the left image and the right image are correctly formed on the retina of the left eye E1 and the right eye E2 of the user, and thus the user simultaneously recognizes two images captured in different directions. Thus, the user can perceive 3D images having the three-dimensional effect and the sense of distance implemented with respect to images being displayed.

Accordingly, the ocular lens 21 having the above-described configuration has a horizontal length formed longer than an average interpupillary distance in a human being (more precisely speaking, a maximum width of the human being), thereby permitting extensive use whether the interpupillary distance of the user is narrow or wide.

However, in this case, when light of the image is refracted on the ocular lens 21, a refractive index is changed in accordance with wavelength of light, thereby causing a change in optical axis, nonlinear distortion, and increased chromatic aberration caused by the change in optical axis. In other words, the images of the object P that are formed on the left and right curved surfaces 21A and 21B of the front surface of the ocular lens 21 become blurred, or a peripheral region of the object P displayed on the rear plane surface 21b become spread out in a rainbow-like color.

As such, in order to solve aforementioned problems, by using the achromatic prisms 22 and 23 made by combining a first prism 24 and a second prism 25 having different refractive indices from each other, the present invention can achieve correction of optical paths of the left image and the right image of the object P while passing through the achromatic prisms 22 and 23, thereby achieving correction of the change in optical axis, nonlinear distortion, and chromatic aberration. Accordingly, images corrected by the achromatic prisms 22 and 23 are magnified and formed on the retina of the left eye E1 and right eye E2 while passing through the ocular lens 21.

The achromatic prisms 22 and 23 transfer the captured images to the ocular lens 21 to be displayed. Here, a first achromatic prism 22 and a second prism 23 are respectively placed at the front sides of the left curved surface 21A and the right curved surface 21B of the front convex portion 21a.

The achromatic prisms 22 and 23 come into close contact to each other by forming a rear surface of the first prism 24 and a front surface of the second prism 25 into planar structures. Here, a front surface of the first prism 24 forms a first protruding angular portion 24A at a first side of the front surface (direction of the glabella of the user), and a rear surface of the second prism 25 forms a second protruding angular portion 25A at a second side of the rear surface (direction of associated one of temples of the user).

In other words, the first and second prisms 24 and 25 are formed into a triangle shape. Here, the first prism 24 has the first protruding angular portion 24A, which is one-sided in a direction of a first side (inwards (direction of the glabella of the user)). When based on the first protruding angular portion 24A, a second long side portion 24b having a relatively long length is placed in a direction of the front surface of the first prism 24, and a short side portion 24a having a relatively short length is placed in the direction of the first side (direction of the glabella of the user). Further, the second prism 25 has the second protruding angular portion 25A, which is one-sided in a direction of a second side (outwards (direction of associated one of temples of the user)). When based on the second protruding angular portion 25A, a first long side portion 25a having a relatively long length is placed in a direction of the rear surface of the second prism 25, and a short side portion 25b having a relatively short length is placed in the direction of the second side (direction of associated one of temples of the user).

Accordingly, the first achromatic prism 22 through which the left image displayed on the first image display part 11 has a structure in which a right side of the front surface of the first prism 24 has an angular shape (forms the first protruding angular portion 24A), and a left side of the rear surface of the second prism 25 has an angular shape (forms the second protruding angular portion 25A). Further, the second achromatic prism 23 through which the right image displayed on the second image display part 12 has a structure contrary to that of the first achromatic prism 22.

In the achromatic prisms 22 and 23, a material in accordance with the refractive indices of the first prism 24 and the second prism 25, and tilt angles of front and rear surfaces of each of the first prism 24 and the second prism 25 are determined so that the achromatic prisms 22 and 23 can achieve correction of the change in optical axis, nonlinear distortion, and chromatic aberration by using refraction of light caused while passing through the first and second prisms 24 and 25.

Here, in order that the images of the object P passed through the achromatic prisms 22 and 23 are accurately formed on the left and right curved surfaces 21A and 21B of the ocular lens 21, each of the achromatic prisms 22 and 23 is configured in which the first long side portion 25a having a longer length based on the second protruding angular portion 25A of the second prism 25 is placed in parallel to a center tangent line T of each of the curved surfaces 21A and 21B.

In other words, the first long side portion 25a of each of the second prisms 25 is placed in parallel relative to the tangent line T tangent to a point that divides a horizontal length of each of the left and right curved surfaces 21A and 21B into two equal parts. Accordingly, each of the achromatic prisms 22 and 23 is configured in which the second protruding angular portion 24A of the first prism 24 is placed in a tilted position while facing the front inside (direction of the glabella of the user).

In this case, it is desirable that the achromatic prisms 22 and 23 have angles that enable miniaturization of the device and improvement of ease of mounting to be adjacent to the left and right curved surfaces 21A and 21B formed on the convex portion 21a of the ocular lens 21 by minimizing volume (particularly, a vertical length), and enable the first and second prisms 24 and 25 to be manufactured with ease and prevented from external shock.

In consideration of minimization of volume, ease of manufacturing, durability with respect to external shock, and correction efficiency with respect to the change in optical axis, nonlinear distortion, and chromatic aberration, it is appropriate that a tilt angle (θ1) between the front and rear surfaces of the first prism 24 is 5 to 10°, and a tilt angle (θ2) between the front and rear surfaces of the second prism 25 is 8 to 30°.

Here, the tilt angle (θ1) between the front and rear surfaces of the first prism 24 denotes an angle formed by the long side portion 24b and the rear surface (inclined surface) of the first prism 24, and the tilt angle (θ2) between the front and rear surfaces of the second prism 25 denotes an angle formed by the long side portion 25a and the front surface (inclined surface that comes into close contact with the rear surface of the first prism 24) of the second prism 25.

The ocular lens 21 has front-surface curvature so that the tangent line T of each of the curved surfaces 21A and 21B is formed in parallel in response to a protruding angle of the rear surface of the second prism 25.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A glasses-free 3D display device, comprising:
an ocular lens having a curved structure in which a convex portion bulges outwards from a center of the ocular lens, and of which a horizontal length is formed to be longer than an interpupillary distance of a user; and
a pair of achromatic prisms respectively placed at front sides of a left curved surface and a right curved surface of the convex portion,
wherein the achromatic prisms enable paths of light to be corrected while left and right images of an object that are individually captured and displayed pass through the achromatic prisms, so that chromatic aberration, a change in optical axis, and nonlinear distortion are corrected, and
the left and right images corrected by the achromatic prisms are magnified and formed on the retina of a left eye and a right eye of the user respectively while passing through the ocular lens.

2. The glasses-free 3D display device of claim 1, wherein each of the achromatic prisms is configured with:
a first prism having a first protruding angular portion at a first side of a front surface thereof; and
a second prism of which a front surface is tightly coupled with a rear surface of the first prism by being close contact therewith, and having a second protruding angular portion at a second side of a rear surface thereof.

3. The glasses-free 3D display device of claim 2, wherein
each of the achromatic prisms is configured in which
the first protruding angular portion of the first prism is placed in a direction of a glabella of the user, and a long side portion of the first prism is placed in a direction of the front surface the first prism, and
the second protruding angular portion of the second prism is placed in a direction of associated one of temples of the user, and a long side portion of the second prism is placed in a direction of the rear surface the second prism.

4. The glasses-free 3D display device of claim 3, wherein
each of the achromatic prisms is configured in which
the long side portion having a longer length based on the second protruding angular portion of the second prism is placed in parallel to a center tangent line of each of the curved surfaces.
